# NEW EUROPEAN PATENT SPECIFICATION

(11) **EP 0 242 183 B2**
(45) Date of publication and mention of the opposition decision: **05.04.1995**
(45) Mention of the grant of the patent: 16.08.1990
(21) Application number: 87303277.5
(22) Date of filing: 14.04.1987
(51) Int. Cl.: B65B 55/00, B65B 31/00, A23L 1/333

(54) **Process for treating and packing mussels or other bivalve seafood**
Verfahren zum Behandeln und Verpacken von Muscheln oder anderen zweischaligen Meeresfrüchten
Procédé de traitement et d'empaquetage de moules ou d'autres fruits de mer bivalves

(30) Priority: 16.04.1986 IE 100786
(43) Date of publication of application: 21.10.1987
(73) Proprietor: Ridwan Limited, Bandon, County Cork (IE)
(72) Inventor: Boylan, Desmond, Bantry County Cork (IE)
(74) Representative: Coyle, Philip Aidan

(56) References cited:
- EP-A- 0 094 362
- FR-A- 2 093 205
- FR-A- 2 544 179
- JP-A- 6 094 053
- US-A- 3 615 726
- US-E- 29 137

## Description

The present invention relates to a process for treating and packing mussels or other bivalve seafood.

Seafood, and noteably bivalve seafood for example mussels, has become an increasingly popular source of food. Although bivalve seafood, in particular mussels, are naturally occurring in coastal waters, they are now in many instances harvested in coastal waters on a commercial scale to meet market demands. However, one problem is that the major markets for the mussels are often distant from the source of the mussels and it is necessary to trans-ship the food over long distances.

One basic problem is that mussels cannot be frozen live or raw, nor can they be kept live by chilling, for long periods of time in a ready to cook state, i.e. graded, cleaned and debyssed. The meat in a mussel generally forms a coating on the inside surface of the mussel shell. In order to facilitate the removal of the meat from the shell it is necessary that the mussel be cooked while it is still live or raw. The cooking process induces the meat to contract or curl up so that it is easily eaten. However, if the mussel is frozen while live or raw in its shell, when cooked the mussel meat will not curl up or contract to give the vendable appearance of normal cooked mussel meat. Once the mussel dies after being out of its natural environment for about a week or two, the meat will not curl up when it is being cooked. Thus, two methods of shipping mussels have been used to date.

First, live or raw mussels, after being harvested from the sea, are purified and trained to retain their juices in depuration tanks for about forty-eight hours, and in conventional manner are then graded and packed in ventilated bags and shipped to customers at ambient temperatures. This method has a number of disadvantages. First, changes in temperature during shipping can induce premature spawning which may render an entire consignment useless. Further, the mussels are in some instances at least one full week out of the sea when received by the customer. Most mussels are only seasonally available and the product does not enjoy a high level of acceptability with top rank chefs and caterers due to lack of freshness, long preparation time and wastage.

Second, mussels can be trans-shipped in a pre-cooked frozen state. In this method the mussels are harvested, purified in conventional manner, graded, debyssed and washed, pressure cooked or boiled, and then frozen, packed and shipped to the customer. This method also has some disadvantages, namely in the cooking process the shell opens and the natural juices and hence much of the flavour is lost. Also, the handling creates a danger of bacterial contamination. This product does not find great favour with top rank chefs and caterers, as the mussel meat without the protection of the juices around it, acting as a protective glaze, is deteriorated in both taste and texture by the action of the freezing process.

Furthermore, mussels which have been cooked and are subsequently chilled, although not frozen, are also less highly regarded since, because of the loss of juices, the meat tends to deteriorate by becoming dry with subsequent loss of taste.

EP-A 0 094 362 discloses a process for treating mussels in which the mussels are arranged in a container which is adapted to compact the mussels to maintain the shells of the mussels in a substantially closed condition. The mussels are heated in juice/water in the container up to the point where they tend to open.

When the healing process is completed the mussels are cooled and the juice is removed. The mussels are then deep frozen and the compacting force is relieved.

FR-A 2 093 205 discloses a method for the storage and the packaging for transport of bivalvular shall-fish, in particular oysters. The oysters are either packed individually or as a "solid block " in an envelope which maintains the shells closed so as to keep the oysters alive during transport.

Thus, it is an object of the present invention to provide a process for packing and treating bivalve seafood, in particular mussels, which substantially mitigates the above referred problems.

According to the invention there is provided a process according to Claim 1.

The advantage of the invention is that by using an envelope to mechanically hold the mussel shells in a substantially dosed condition, the juices are maintained with the mussel meat in the shells so that no flavour is lost and in addition the vacuum with the envelope ensures that during the heating stage there is very little air present which could cause expansion or stretching of the envelope.

After heating or pre-cooking the mussels, they are quickly frozen. The advantage of freezing the mussels in the envelope is that the juices are frozen with the mussel meat and the meat tends to retain its texture and flavour. The mussels are arranged in a single layer as this is most suitable for uniform heat penetration of the mussels.

The envelope is preferably a heat shrinkable plastics bag which is initially open at one end to facilitate filling of the mussels, the open end being sealed after the vacuum has been applied. Further preferably, the plastics bag is heat shrunk onto the layer of mussels as the vacuum is applied.

The invention will be understood from the following description of an embodiment thereof, given by way of example, with reference to the accompanying drawings, in which:
Figure 1 is a perspective view of a pack of mussels when treated and packed by the process of the invention;
Figure 2 is a cross-sectional view of the pack of mussels in Figure 1, and
Figure 3 is a perspective view of a heat-shrinkable plastics bag containing mussels prior to heating the bag and the vacuum being applied.

The process according to the embodiment of the invention as it applies to mussels is as follows. The mussels are harvested and purified in conventional manner in purification tanks. Next, the mussels are graded by size in a conventional grading machine. Once the mussels are graded they are "debyssed" which is the known term used to describe the removal of the long threads or cords by which the mussel attaches itself to rocks in the sea.

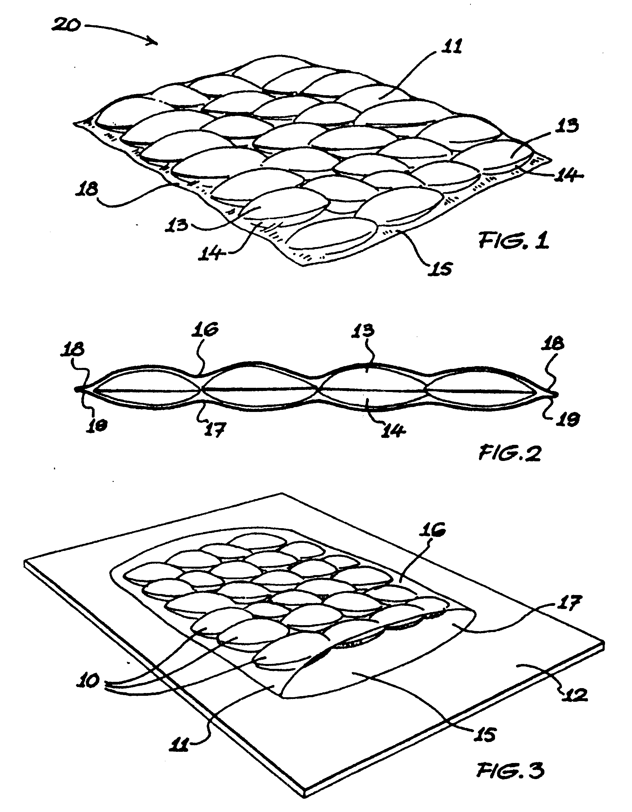

As shown in Figure 3 the live or raw mussels 10 are placed in a heat shrinkable plastics bag 11 and located on the preparation table 12 of a vacuum packing machine (not shown). It will be noted that the mussels 10 are arranged in a single layer as shown. Each of the mussels 10 comprises top and bottom shell portions 13, 14 respectively (figure 1) which are hinged together and are in a closed condition when the mussels 10 are placed in the bag 11. The mussels 10 are arranged in the single layer with a substantially common orientation; that is to say, on each side of the layer all the shell portions face in generally the same direction normal to the plane of the layer, as shown in figure 2.

Next, a vacuum system (not shown) is suitably applied to the open end 15 of the bag 11. The bag 11 is also subjected to a suitable temperature to cause it to shrink and thus as the bag shrinks and is also sucked onto the top and bottom shell portions 13, 14 respectively of the mussels 10, substantially all of the air within the bag 11 is removed. The open end 15 of the bag 11 is then sealed in conventional manner, under the vacuum conditions. As shown in Figure 2 the opposite side parts 16, 17 of the bag 11 are drawn tightly around the layer of mussels 10 so that the top and bottom shell portions 13, 14 of the mussels 10 are securely held together in the closed condition.

The adjacent margins 18, 19 of the opposite side part 16, 17 respectively of the bag 11 are also heat sealed together close to the edges of the layer to form the bag 11 into an envelope which tightly holds the portions 13, 14 closed together. Thus, a pack 20 of mussels comprises a single layer of mussels formed as shown in Figure 1. Although a pack of mussels could be produced having a number of layers of mussels it has been found that because of the very thin mussel shell of rope cultured mussels, if the mussels are in a number of layers, when the vacuum and heat is applied to the bag 11, some of the shells may become damaged. It will be appreciated that instead of a bag 11 a pair of heat shrinkable plastics sheets could also be used to form the final envelope. A vacuum pressure of 110 Pa (5/6 mmHg (Torr)) has been found to be suitable, however, this may be varied as desired. Provided that sufficent heat is applied, ground mussels which have a much thicker shell may be arranged in a number of layers.

Next, the sealed pack 20 is subjected to a heat process, for example by immersing in heated water, to cause the meat within the mussels 10 to contract and curl up to form the normal vendable appearance. A table listing the most suitable heating temperatures and time periods is given below.

| Temperature | Time |
|---|---|
| 260 C | 55 seconds |
| 180 C | 60 seconds |
| 140 C | 1 minute, 5 seconds |
| 120 C | 1 minute, 20 seconds |
| 110 C | 1 minute, 40 seconds |
| 100 C | 2 minutes, 20 seconds |
| 95 C | 3 minutes, 10 seconds |
| 90 C | 4 minutes, 30 seconds |
| 85 C | 6 minutes |
| 82 C | 8 minutes |
| 79 C | 10 minutes |
| 75 C | 12 minutes |
| 68 C | 25 minutes |

At the lower end of the scale 68°C for a period of 25 minutes is approximately the lowest temperature at which the mussel meat will contract. At the upper temperture level, saturated steam is pumped into a sealed autoclave where the vacuum packed mussels are stacked on racks. The maximum temperature of the saturated steam is approximately 260°C and the period of time must not exceed approximately 55 seconds. A longer period of time at this temperature may destroy the quality of the meat and a higher temperature may also deteriorate the meat.

Following the beating process, the vacuum packs are cooled to ambient temperature either by immersion in chilled water or by being placed in a blast chilled air room. The mussels are then frozen.

After being cooled to ambient temperature the packs are then frozen in a blast freezer to approximately -24°C after which they are packed into boxes of suitable size and held in cold storage. By freezing the packs at sub-zero temperature there is very little chance of spore bacteria breeding.

The lack of oxygen or air in the evacuated packs would provide an ideal breeding ground for the strain of spore bacteria known as clostridia. However, the sub-zero temperature at which the packs are held prevents these spores from breeding.

Any small amount of the juices which may escape from the mussels is kept within the sealed plastics bag 11 and this juice is also frozen with the mussels. Thus, the chef or caterer may also use this juice in the cooking process.

In the known shipment of live mussels the debyssing normally has to be done by the customer as once the long threads or cords are removed the life of the mussels is considerably shortened. The process of removing the long threads by the customer is very laborious, time consuming and therefore expensive. An advantage of the embodiment of the invention is that the customer does not have to carry out this task as the threads have already been removed. Further advantages are: (i) the heating process causes the mussel meat to contract and curl into the normal presentation shape without being fully cooked; (ii) the vacuum pack keeps the shells tightly closed thereby preserving all the natural juices, flavours and texture of the meat; (iii) the frozen packs provide for the availability of mussels throughout the year; (iv) the mussels are subject to no direct handling after being placed in the envelope thus reducing the risk of bacterial contamination; (v) the end product of the process results in a highly vendable product with a high degree of acceptability to chefs of stature and high class caterers and equates to sea-fresh, uncontaminated mussels which can be stored in a freezer ready for cooking; (vi) the packs are readily made up into consignments for shipment.

## Claims

1. A process for packing and treating mussels or other bivalve seafood (10) in which the bivalves (10) are vacuum packed within a flexible envelope (11) which is adapted to maintain the bivalves in a substantially closed condition and thereafter heating the bivalves (10) and envelope (11)
characterised in that:
the bivalves (10) are arranged in a single layer in the envelope (11) with the envelope (11) being drawn tightly onto the top and bottom shell portions (13,14) of individual bivalves (10);
the bivalves (10) and envelope (11) are heated for a sufficient time and at a sufficient temperature to partially cook the bivalves, until the bivalve meat curls up within the bivalves; and
the envelope and bivalves are frozen at a sub-zero temperature subsequent to heating.

2. A process as claimed in Claim 1, wherein the envelope (11) is of heat-shrinkable plastics material, the envelope material being heat shrunk during vacuum packing.

3. A process as claimed in any preceding claim, wherein the bivalves (10) are arranged in a single layer with a substantially common orientation.

4. A process as claimed in any preceding claim, wherein the envelope and bivalves are frozen subsequent to heating.

5. A pack of bivalves whenever prepared in accordance with the process of any one of Claims 1 to 4.

## Patentansprüche

1. Verfahren zum Verpacken und Behandeln von Muscheln oder anderen zweischaligen Meeresfrüchten (10), bei dem die zweischaligen Meeresfrüchte (10) in einer flexiblen Hülle (11) vakuumverpackt werden, die so ausgelegt ist, daß sie die zweischaligen Meeresfrüchte in einem im wesentlichen geschlossenen Zustand hält, und danach Erhitzen der zweischaligen Meeresfrüchte (10) und der Hülle (11),
dadurch gekennzeichnet, daß
die zweischaligen Meeresfrüchte (10) in der Hülle (11) in einer einzigen Schicht angeordnet sind, wobei die Hülle (11) fest über den oberen und unteren Schalenteil (13, 14) der einzelnen zweischaligen Meeresfrüchte (10) gezogen wird;
die zweischaligen Meeresfrüchte (10) und die Hülle (11) lange genug und bei ausreichender Temperatur erhitzt werden, um die zweischaligen Meeresfrüchte teilweise zu kochen, bis sich das Fleisch der zweischaligen Meeresfrüchte in den zweischaligen Meeresfrüchten rollt; und
die Hülle und die zweischaligen Meeresfrüchte im Anschluß an das Erhitzen bei einer Temperatur unter Null eingefroren werden.

2. Verfahren nach Anspruch 1, bei dem die Hülle (11) aus wärmeschrumpfbaren Kunststoffmaterialien besteht, wobei das Hüllenmaterial während des Vakuumverpackens wärmegeschrumpft wird.

3. Verfahren nach einem vorgenannten Anspruch, bei dem die zweischaligen Meeresfrüchte (10) mit einer im wesentlichen gemeinsamen Orientierung angeordnet werden.

4. Packung zweischaliger Meeresfrüchte, hergestellt gemäß dem Verfahren nach den Ansprüchen 1 bis 3.

5. Verpackung von zweischaligen Meeresfrüchten, welche gemäß dem Verfahren nach einem der Ansprüche 1 bis 4 hergestellt ist.

## Revendications

1. Procédé pour empaqueter et traiter les moules ou autres fruits de mer bivalves (10) dans lequel les bivalves (10) sont empaquetés sous vide dans une enveloppe flexible (11) qui est adaptée pour maintenir les bivalves essentiellement fermés, et ensuite pour chauffer les bivalves (10) et l'enveloppe (11), caractérisé en ce que :
- les bivalves sont disposés en une couche unique dans l'enveloppe (11), l'enveloppe (11) étant tendue sur les parties supérieure et inférieure des coquilles (13, 14) des bivalves individuels (10) ;
- les bivalves (10) et l'enveloppe (11) sont chauffés pendant un temps suffisant et à une température suffisante pour cuire partiellement les bivalves de façon à faire se rétracter la chair des bivalves à l'intérieur des coquilles, et : l'envelopppe et les bivalves sont congelés à une température inférieure à zéro après le chauffage.

2. Procédé selon la revendication 1, dans lequel l'enveloppe (11) est en matière plastique thermorétractable, le matériau de l'enveloppe étant chauffé pour être rétracté pendant l'empaquetage sous vide.

3. Procédé selon l'une quelconque des revendications précédentes, dans lequel les bivalves (10) sont disposés en une couche unique avec une orientation sensiblement commune.

4. Paquet de bivalves préparés selon le procédé de l'une quelconque des revendications 1 à 3.

5. Paquet de bivalves préparées selon le procédé de l'une quelconque des revendications 1 à 4.
